# EUROPEAN PATENT APPLICATION

(11) **EP 4 063 331 A1**
(43) Date of publication of application: **28.09.2022**
(21) Application number: 21164135.2
(22) Date of filing: 23.03.2021
(51) Int. Cl.: C02F 3/34, C02F 3/02, C02F 1/461, C02F 3/10, C02F 101/34, C02F 101/38, C02F 1/78, C02F 1/28, C02F 1/44, C02F 103/38, C02F 1/20, C02F 3/12, C02F 103/08

(54) **BIODEGRADATION OF ORGANIC CONTAMINANTS BY HALOPHILIC MICROORGANISMS UNDER NUTRIENT LIMITATION**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a method for reducing the content of at least one contaminant selected from the group consisting of nitrobenzene, formate, phenol, 4,4'-Methylenedianiline (MDA) and aniline in hypersaline wastewater under conditions, wherein at least one inorganic nutrient limits growth of said cells. In the method, a composition comprising hypersaline wastewater, microbial cells belonging to at least one genus selected from the group consisting of Haloferax, Halomonas, Aliifodinibius and Oceanobacillus and at least one contaminant is provided and incubated for the degradation of the contaminant. The composition is characterized by a growth-limiting concentration of at least one inorganic nutrient, in particular nitrogen and/or phosphor. The treated hypersaline wastewater is used for electrochemical production of chlorine and sodium hydroxide.

## Description

The present invention relates to a method for reducing the content of at least one contaminant selected from the group consisting of nitrobenzene, formate, phenol, 4,4'-Methylenedianiline (MDA) and aniline in hypersaline wastewater under conditions, wherein at least one inorganic nutrient limits growth of said cells.

Industrial processes generate millions of liters of highly saline residual water. It has been estimated that 5 % of the total world effluents are highly saline.

For example, the production of diamines and polyamines from the diphenylmethane series which are major intermediates for the production polyurethane is accompanied by the generation of large amounts of hypersaline wastewater (see US2009240076). Di- and polyamines of the diphenylmethane series are usually produced by reacting aniline and formaldehyde in the presence of acid catalysts such hydrochloric acid. After producing the diamines and polyamines from the diphenylmethane series, the acid catalyst is neutralized by addition of a base, typically aqueous sodium hydroxide. In general, the addition of the neutralizing agent is carried out so that the resulting neutralization mixture can be separated into an organic phase containing the polyamines of the diphenylmethane series and excess aniline and an aqueous phase containing sodium chloride together with residual organic constituents (i.e. hypersaline wastewater). In the past, hypersaline wastewaters frequently were disposed after removal of organic constituents by physical and/or chemical methods for example adsorption, ozonation and electrochemical treatment see US2009240076.

However, physical and/or chemical methods that are used to treat residual water containing organic compounds, are often not able to reduce the total organic carbon content in the salty residual streams down to the required maximum level. The residual waters (such as the wastewater from production of di- and polyamines of the diphenylmethane series) often comprise organic contaminants such as formate, phenol, aniline, nitrobenzene and 4,4'-Methylenedianiline (MDA) and are either brought into the environment after considerable dilution with fresh water or they are treated by physico-chemical methods. Thus, alternative treatment options for hypersaline wastewater are required.

WO 2019/121201 discloses the use of the halophile archaeon Haloferax for the degradation nitrobenzene, formate, phenol, 4,4'-Methylenedianiline (MDA) and aniline in hypersaline wastewater. It is not disclosed that the use of inorganic nutrients only in growth-limiting concentrations achieves the same or an even better effect than using them in non-limiting concentrations.

However, the process of sodium chloride electrolysis is highly sensitive to any kind of contamination. In other words, brine that is to be subjected to this process should ideally not contain any components besides water and sodium chloride. If inorganic nutrients are present in non-limiting concentrations during the degradation of organic contaminants, residual concentrations of inorganic nutrients remain. Therefore, WO 2019/121201 envisages a purification step of the brine before electrolysis which removes inorganic components such as trace elements or salts of the media components. Of course, such an additional purification step increases the cost of the process.

Therefore, the problem underlying the present invention is the provision of a method for removing organic contaminants from hypersaline wastewater which yields a product which is low in organic content as well as in inorganic components except for sodium chloride.

The problem is solved by the embodiments defined in the claims and further below in this specification.

In a first embodiment, the present invention relates to a method for decreasing the content of at least one contaminant selected from the group consisting of nitrobenzene, formate, phenol, methylenedianiline and aniline in hypersaline wastewater, said method comprising the steps of:
a) providing a composition A comprising hypersaline wastewater, microbial cells belonging to at least one genus selected from the group consisting of *Haloferax, Halomonas, Aliifodinibius and Oceanobacillus* and at least one contaminant, wherein said composition A is characterized by a growth-limiting concentration of at least one inorganic nutrient, and
b) incubating composition A, thereby reducing the content of the at least one contaminant so that a composition B is generated.

### Provision of composition A and its properties

According to step a) of the method of the present invention, a composition A comprising wastewater and microbial cells shall be provided. Said composition A is a solution which comprises said wastewater, microbial cells and said at least one contaminant selected from the group consisting of nitrobenzene, formate, phenol, 4,4'-Methylenedianiline (MDA) and aniline. The wastewater shall be hypersaline wastewater, i.e. wastewater having a high concentration of NaCl as defined herein below. In particular, the wastewater shall be industrial wastewater comprising said at least one contaminant such as industrial brine. Thus, the at least one contaminant is typically introduced into composition A via the wastewater.

The term "providing" relates to any sequence of method steps which result in the presence of the composition A as defined above. The microbial cells may be added actively to the wastewater, e.g. from stock cultures, or they may already be present in the wastewater or in the reactors used for treating the wastewater. Thus, with respect to the microbial cells, the term "providing" explicitly includes the presence of such cells even if they are not actively and deliberately added.

However, in an preferred embodiment of the method of the present invention, composition A is provided by mixing wastewater with the microbial cells.

All genera recited above are halophilic and thus require a high concentration of NaCl for growth. Accordingly, composition A shall comprise NaCl in a high concentration. This allows for the treatment of hypersaline wastewaters (i.e. for reduction of the contaminant as referred to herein) without diluting the wastewater.

A "high concentration of NaCl" as referred to herein is a concentration of least 6 % (w/v), based on the total volume of the wastewater or the composition. The wastewater, composition A or B may comprise NaCl in a concentration up to the saturation concentration of NaCl since it has been shown in the studies underlying the present invention that e.g. the aniline content was reduced even at a NaCl concentration of 20.0 % (w/v). Thus, the upper limit for the concentration is, in principle, the saturation concentration of NaCl. Thus, a high concentration of NaCl is a concentration of at least 6 % (w/v) up to 25 % (w/v) based on the total volume of the wastewater or the composition. Accordingly, the wastewater is not brackish water or seawater which both have a lower concentration of NaCl.

Preferably, a high concentration of NaCl is a concentration of NaCl of 7 % (w/v) to 25 % (w/v), more preferably of 10 % (w/v) to 25 % (w/v), even more preferably of 12 % (w/v) to 22 % (w/v), and most preferably of 15 % (w/v) to 20 % (w/v) based on the total volume of composition or wastewater (e.g. of composition A). In the studies underlying the present invention it was shown that optimal treatment was achieved at a concentration of NaCl of about 17% (w/v).

The optimal NaCl concentration may depend on the contaminant. For example, with respect to aniline, the wastewater, composition A, or B, preferably comprises NaCl in a concentration of 12 % (w/v) up to 25 % (w/v) based on the total volume of composition or wastewater. Further, the optimal NaCl concentration may depend on the concentration of the contaminant in the wastewater/composition. E.g. it was observed in the studies underlying the present invention that higher concentrations of NaCl allow for an improved reduction of aniline, if the aniline concentration is high (e.g. larger than 20 mg/l).

High concentrations of NaCl can be found in various industrial wastewaters. In a preferred embodiment, the hypersaline wastewater has been isolated from methylene diamine production (as a preproduct of polyurethanes). Accordingly, step a) of the method of the present invention may comprise the isolation of hypersaline wastewater from methylene diamine production.

In particular, the wastewater is derived, i.e. has been isolated from the production of diamines and polyamines of the diphenylmethane series. The term "diamines and polyamines of the diphenylmethane series, refers to amines and mixtures of amines of the following type: 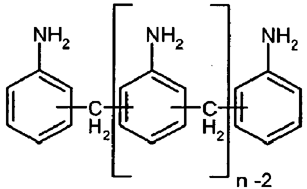 wherein n is an integer of 2 or larger than 2.

As set forth elsewhere herein, diamines and polyamines of the diphenylmethane series are preproduct of polyurethanes and can be produced by well-known methods. Preferred methods of the production of said diamines and polyamines the diphenylmethane series are e.g. disclosed in EP 1 813 598 A1 which herewith is incorporated by reference in its entirety.

In an embodiment, the production of di- and polyamines of the diphenylmethane series is carried out by reacting aniline and formaldehyde in the presence of an acid catalyst. In an embodiment, hydrochloric acid is used as acid catalyst. After producing the diamines and polyamines from the diphenylmethane series, the acid catalyst is neutralized by addition of sodium hydroxide. Preferably, the addition of the neutralizing agent is carried out so that the resulting neutralization mixture can be separated into an organic phase containing the diamines and in particular the polyamines of the diphenylmethane series and excess aniline and an aqueous phase. The aqueous phase is the hypersaline wastewater containing the at least one contaminant as set forth herein.

In another embodiment of the present invention, the hypersaline wastewater has been isolated, i.e. is derived from the production of diaryl carbonate. The production of diaryl carbonates, and more particularly diphenyl carbonates, generally takes place by a continuous process, by the production or introduction of phosgene and subsequent reaction of monophenols and phosgene in an inert solvent in the presence of alkali and a nitrogen catalyst at the reaction interface. The production of diaryl carbonates is well known in the art. Preferred production methods are described in US2008053836, the entire contents of which are incorporated herein by reference.

In another embodiment of the present invention, the hypersaline wastewater has been isolated, i.e. is derived from the production of polycarbonates.

The hypersaline wastewater might have been subjected to one or more purification step(s) prior to carrying out step a). The one or more purification steps shall allow for reducing the amount of solvent residues in the wastewater. This can be e.g. achieved by stripping off the solution with steam and/or treatment with adsorbents, in particular with active carbon. Further, the wastewater might have been filtered. Moreover, the hypersaline wastewater may have been purified by treatment of wastewater using ozone (ozonation). Ozonation (also referred to as ozonization) is a chemical water treatment technique based on the infusion of ozone into water (see e.g. WO2000078682).

Further, it is envisaged that the NaCl concentration of the wastewater is concentrated prior to carrying out step a) of the method of the present invention, e.g. by membrane distillation process, osmotic distillation or reverse-osmosis, Further, preferred methods for concentrating a composition comprising NaCl are described elsewhere herein.

Advantageously, cells of the genera of *Haloferax* , *Halomonas, Aliifodinibius* and *Oceanobacillus,* are capable of decreasing content of at least one contaminant as referred to herein (of at least one contaminant selected from the group consisting of nitrobenzene, formate, phenol, methylenedianiline, in particular 4,4'-Methylenedianiline (IUPAC name: Bis(4-aminophenyl)methane) and aniline) in hypersaline salt water. Thus, it is envisaged that the hypersaline wastewater as well as composition A comprises said at least one contaminant.

In accordance with the present invention, the content of at least one contaminant selected from the group consisting of nitrobenzene, formate, phenol, methylenedianiline, in particular 4,4'-Methylenedianiline (MDA) and aniline shall be decreased, i.e. the content of said at least contaminant in the hypersaline wastewater and thus in composition A and B shall be decreased.

The term "at least one contaminant" as used herein mean one or more than one. Thus, the content of one, two, three, four or five contaminants can be reduced. In a preferred embodiment, the content of one contaminant is decreased. In a more preferred embodiment, the contents of contaminants: formate, phenol, methylenedianiline, in particular 4,4'-Methylenedianiline (MDA), and aniline as referred in accordance of the method of the present invention are decreased by the method of the present invention. In another preferred embodiment, the contents of all five contaminants as referred in accordance of the method of the present invention are decreased by the method of the present invention. In particular, said contents are decreased simultaneously.

Thus, the hypersaline wastewater and composition A shall comprise said at least one contaminant of the above-defined contaminants. The concentration of each contaminant except for MDA is preferably at least 0.5 mg/l, more preferably at least 3.0 mg/l. The preferred concentration for MDA is at least 0.05 mg/l. It is particularly preferred that the concentration of phenol is between 0.5 and 8.0 mg/l, that the concentration of MDA is between 0.01and 0.5 mg/l, that the concentration of formate is between 0.5 and 500,0 mg/l and that the concentration of aniline is between 0.5 and 15.0 mg/l.

The following applies to the contaminant aniline:
Preferably, the hypersaline wastewater and/or composition A comprises aniline in an amount of at least 0.5 mg/l, more preferably in an amount of at least 2 mg/l, and most preferably in an amount of at least 5 mg/l. Further, it is envisaged that composition A (or B) comprises aniline in an amount of at least 10 mg/l, in particular in an amount of at least 20 ml/l.

Also preferably, the hypersaline wastewater and/or composition A comprises aniline in an amount of 1 to 100 mg/l, more preferably, in an amount of 2 to 50 mg/l, and most preferably in an amount of 2 to 20 mg/l. Further, it is envisaged that it comprises aniline in an amount of 2 to 12 mg/l.

The following applies to the contaminant formate:
Preferably, the hypersaline wastewater and/or composition A comprises formate in an amount of at least 10 mg/l, more preferably in an amount of at least 30 mg/l, and most preferably in an amount of at least 100 mg/l.

Also preferably, the hypersaline wastewater and/or composition A comprises formate in an amount of 10 mg/l to 10 g/l, more preferably, in an amount of 30 mg/l to 1 g/l, and most preferably in an amount of 50 to 500 mg/l.

The following applies to the contaminant nitrobenzene:
Preferably, the hypersaline wastewater and/or composition A comprises nitrobenzene in an amount of at least 1 mg/l, more preferably in an amount of at least 5 mg/l, and most preferably in an amount of at least 10 mg/l.

Also preferably, the hypersaline wastewater and/or composition A comprises nitrobenzene in an amount of 1 to 100 mg/l, more preferably, in an amount of 2 to 50 mg/l, and most preferably in an amount of 2 to 20 mg/l.

The following applies to the contaminant 4,4'-Methylenedianiline:
Preferably, the hypersaline wastewater and/or composition A comprises 4,4'-Methylenedianiline in an amount of at least 0.05 mg/l, more preferably in an amount of at least 0.2 mg/l, and most preferably in an amount of at least 0.25 mg/l. Further, it is envisaged that it comprises 4,4'-Methylenedianiline in an amount of at least 3 mg/l.

Also preferably, the hypersaline wastewater and/or composition A comprises 4,4'-Methylenedianiline in an amount of 0.25 to 30 mg/l, more preferably, in an amount of 1 to 10 mg/l, and most preferably in an amount of 2 to 7 mg/l. Further, it is envisaged that it comprises 4,4'-Methylenedianiline in an amount of 0.5 to 20 mg/l.

The following applies to the contaminant phenol:
Preferably, the hypersaline wastewater and/or composition A comprises phenol in an amount of at least 1 mg/l, more preferably in an amount of at least 5 mg/l, and most preferably in an amount of at least 10 mg/l. Further, it is envisaged that it comprises phenol in an amount of at least 20 mg/l.

Also preferably, the hypersaline wastewater and/or composition A comprises phenol in an amount of 1 to 500 mg/l, more preferably, in an amount of 5 to 100 mg/l, and most preferably in an amount of 5 to 50 mg/l. Further, it is envisaged that it comprises phenol in an amount of 5 to 20 mg/l.

In a particularly preferred embodiment of the present invention composition A comprises at least two of the contaminants selected from the group consisting of formate, phenol, 4,4'-Methylenedianiline (MDA), nitrobenzene and aniline, wherein the concentrations of the contaminants - if present - are as follows: 50 to 500 mg/l formate, 5 to 20 mg/l phenol, 0.5 to 20 mg/l MDA, 2 to 20 mg/l nitrobenzene and 2 to 12 mg/l aniline.

Preferably, composition A has a total organic carbon ("TOC") content of more than 50 mg/l, more preferably of more than 60 mg/l, even more preferably of more than 60 mg/l, and most preferably of more than 65 mg/l. Further, it is envisaged that composition A has a TOC (total organic carbon) content of more than 70 mg/l, in particular of more than 70 mg/l. Preferably, the composition A can have a total organic carbon ("TOC") content of up to 1000 mg/l.

In accordance with the present invention, the content of at least one contaminant of hypersaline wastewater and thus the content of said at least one contaminant in composition A shall be reduced (the terms "content", "amount" and "concentration" are used interchangeably herein). Said at least one contaminant is selected from the group consisting of nitrobenzene, formate, phenol, methylenedianiline, in particular 4,4'-Methylenedianiline (MDA), and aniline The term "reducing" as used herein shall refer to a significant reduction of the contaminant content (i.e. of the at least one contaminant) in the hypersaline wastewater. Preferably, the term denotes a reduction of said contaminant of at least 30%, at least 50%, at least 70% or in particular of at least 90% or of at least 95% of the total content of said contaminant present in composition A. Accordingly, the total content of a contaminant as referred to herein in composition A shall be reduced by at least 30%, at least 50%, at least 70% or in particular by at least 90% by of at least 95%.

The resulting composition B, i.e. the treated wastewater, preferably comprises aniline in an amount of less than 5 mg/l. More preferably, it comprises aniline in an amount of less than 1 mg/l and most preferably less than 0.2 mg/l.

Also preferably, the treated wastewater comprises formate in an amount of less than 15 mg/l, more preferably less of than 10 mg/l and most preferably less than 5 mg/l after the method of the present invention has been carried out.

Also preferably, the treated wastewater comprises nitrobenzene in an amount of less than 15 mg/l, more preferably of less than 10 mg/l and most preferably of less than 5 mg/l after the method of the present invention has been carried out.

Also preferably, the treated wastewater comprises 4,4'-Methylenedianiline in an amount of less than 15 mg/l, more preferably of less than 10 mg/l and most preferably of less than 5 mg/l after the method of the present invention has been carried out.

Also preferably, the treated wastewater comprises phenol in an amount of less than 15 mg/l, more preferably of less than 10 mg/l and most preferably of less than 5 mg/l after the method of the present invention has been carried out.

Further, it is envisaged that said at least one contaminant is eliminated completely.

By carrying out the method of the present invention, the TOC content will be reduced as well (i.e. in addition to the content of the at least one contaminant). Preferably, the treated wastewater has a TOC content of less than 40 mg/l, more preferably of less than 30 mg/l and most preferably of less than 20 mg/l (in particular after separation of the cells from composition B as described herein elsewhere).

Preferably, the content of the at least one contaminant as referred to herein is reduced by the presence, and thus, by the activity of the microbial cells as referred to herein. Preferably, said the content is reduced by degradation of the contaminant by said cells. A reduction of the concentration of the at least one contaminant by dilution of the wastewater, or composition A or B is not considered as a reduction of the content of said at least one contaminant. Accordingly, the term "reducing the content of at least one contaminant..." does not encompass the reduction of the concentration of the said at least one contaminant by dilution effects (e.g. by diluting the hypersaline wastewater or composition A or B).

The microbial cells to be used in accordance with the present invention belong to at least one genus selected from the group consisting of *Haloferax, Halomonas, Aliifodinibius and Oceanobacillus,* i.e. microbial cells belonging to at least one of the aforementioned genera are present in the hypersaline wastewater at the end of method step a). It is more preferred that microbial cells to be used in accordance with the present invention belong to at least one genus selected from the group consisting of *Haloferax, Halomonas* and *Aliifodinibius* and *Oceanobacillus.* It is most preferred that microbial cells to be used in accordance with the present invention belong to the genus *Haloferax* and/or *Halomonas.* Preferred is the genus *Halomonas* is *Halomonas organivorans.*

Preferred in the genus *Haloferax* is *Haloferax mediterranei.* Especially preferred is the strain *Haloferax mediterranei* which has been deposited in the DSM (Deutsche Sammlung von Mikroorganismen und Zellkulturen, Braunschweig, Germany) under DSM number 1411. Thus, it contemplated that cells from the strain *Haloferax mediterranei* DSM 1411 are used (abbreviated herein HFX). The strain has been described by Rodriguez-Valera, F., Juez, G., Kushner, D. J. (1983). Halobacterium mediterranei sp. nov., a new carbohydrate-utilizing extreme halophile. Syst.Appl.Microbiol. 4: 369-381. The document is herewith incorporated by reference in its entirety.

How to culture these strains is well known in the art. For example, suitable culture conditions can be obtained from the DSMZ database for the respective strain. Further information can be derived from the description of the genera and species in the International Journal of Systematic and Evolutionary Microbiology. One suitable medium composition is described in Example 2 of the Examples section.

The microbial cells to be contacted with the hypersaline wastewater in step a) shall be viable, i.e. living cells. Whether cells are viable or not can be assessed by well-known methods. Of course, a certain percentage of the cells to be mixed with composition A might not be viable. However, this is taken into account by the skilled person.

In an embodiment, a suspension of microbial cells belonging to at least one of the above-defined genera is mixed with the hypersaline wastewater. The cells are preferably derived from a pre-culture of cells of the respective genus. The suspension shall comprise a suitable substrate (i.e. a carbon source). Although not necessary, the pre-culture of the cells can be carried out in the presence of the at least one contaminant as referred to herein. In an alternative embodiment of the present invention the microbial cells are present in the reactor used for method step b). In yet another alternative embodiment of the present invention, the microbial cells are already present in the wastewater due to their presence in the facilities used for transporting or storing the wastewater, such as piping or storage tanks.

The amount of microbial cells to be used can be determined by the skilled person. The cell amount to be mixed shall allow for a sufficient reduction of the at least one contaminant as referred to herein in the hypersaline wastewater and thus in composition A (which comprises the hypersaline wastewater). The amount e.g. depends on the volume of wastewater to be treated by the method of the present invention. In general, the larger the volume of composition A to be treated, the larger shall be the amount of cells to be used. This will be taken into account by the skilled person.

The mixing may take place in a suitable container. In an embodiment, the mixing is carried out in a bioreactor. The term "bioreactor" as used herein refers to a system in which conditions are closely controlled to permit the reduction of the content of the at least one contaminant as referred to herein. In an embodiment, said bioreactor is a stirred tank reactor. Preferably, the bioreactor is made of a non-corrosive material such as stainless steel. The bioreactor can be of any size as long as it is useful for the incubation of composition A. Preferably, the bioreactor allows for a large-scale reduction of content of said at least one contaminant. Therefore, it is envisaged that the bioreactor has a volume of at least 1, 10, 100, 500, 1000, 2500, or 5000 liters or any intermediate volume. However, it is also envisaged to carry out the method of the present invention at a small scale, such as with 5 to 100 ml of composition A.

While the conditions for a pre-culture of the microbial cells may be freely chosen, it is essential that the composition A is characterized by growth-limiting conditions of at least one inorganic nutrient.

The concept of growth-limiting conditions is based on Liebig's law of the minimum. A plant or - as in the present case - a microbial cell requires nutrients in a certain proportion for optimal growth. If a nutrient is present below this proportion, growth and proliferation of the microbial cell is decreased. This concept is well known to any person skilled in the art. According to the present invention growth of a microbial cell is preferably determined by measuring the dry weight of the biomass per volume of culture medium. If under otherwise identical conditions the concentration of a nutrient is decreased below the threshold of limitation, the biomass per volume will also decrease.

Because a stable supply of nutrients is required for the proper functioning of any cell, it would be expected that growth-limiting conditions of any kind affect the physiological functions - including the degradation of contaminants - of a microbial cell negatively. However, it was surprisingly found in the study underlying the present invention that contaminant degradation by the microbial cells present in composition A was unimpaired and even more stable than under non-limiting conditions.

This finding has additional advantages for the use of the treated hypersaline wastewater in composition B: composition B may be used in a sodium chloride electrolysis process. This process is quite sensitive towards the presence of any constituent except for sodium chloride. The use of growth-limiting concentrations of at least one inorganic nutrient in composition A means that said at least one inorganic nutrient will be completely taken up by the microbial cells during contaminant degradation. Thus, under these conditions composition B is free from at least one constituent which may negatively affect the electrolysis process. Moreover, growth limiting concentrations of at least one nutrient lead to a decreased build-up of microbial biomass which by itself might impair electrolysis and has, thus, to be removed after the further use of composition B.

Therefore, it is essential that composition A is characterized by a growth-limiting concentration of at least one inorganic nutrient. Preferably, the inorganic nutrient which is present only in a growth-limiting concentration is selected from the group consisting of phosphor, nitrogen, sulfur, potassium, magnesium and iron. More preferably the inorganic nutrient present in a growth-limiting concentration is nitrogen and/or phosphorous.

Whether any nutrient is present in a growth-limiting concentration may easily be determined by the person skilled in the art. If addition of said inorganic nutrient to composition B under otherwise unchanged conditions increases the concentration of microbial biomass as compared to an otherwise identical composition A, the concentration of said inorganic nutrient is growth-limiting. For this purpose, the biomass is determined after the microbial culture enters the stationary growth phase. The limitation of inorganic nutrients is always defined for the individual nutrient by its ratio, preferably the molar ratio, to the amount of organic carbon present in composition A.

Nitrogen is present in a growth-limiting concentration if not more than 0.04 mol, more preferably not more than 0.07 mol, nitrogen per mol of organic carbon are present. Phosphor is present in a growth-limiting concentration if not more than 0.018 mol, more preferably not more than 0.001 mol, phosphor mol of organic carbon are present.

The relevant concentration of organic carbon for defining the ratios set forth above relates to those species of organic carbon which can be utilized by the microbial cells for their building and / or energy metabolism. Species of organic carbon which cannot be utilized due to lacking biochemical capabilities of the microbial cells or due to lacking bioavailability are not counted.

Composition A may further comprise media components which allow for the reduction of the content of said at least one contaminant by the microbial cells. Such media components are well known in the art and include e.g. NH₄Cl, KH₂PO₄, Na₂SO₄, MgCl₂ (e.g. MgCl₂ * 6 H₂O), FeCl₃, MgSO₄, CaCl₂ (e.g. CaCl₂ * 2 H₂O), KBr and KCI. In an embodiment, composition A comprises a phosphor source, a nitrogen source, a sulfur source, a potassium source and/or a magnesium source (as media components). The concentrations of said components are chosen in such a way that at least one of the above-defined inorganic nutrients is present in a growth-limiting concentration as defined above. Composition A may further comprise trace elements such as iron, copper, zinc and cobalt.

The selection of suitable media components can be carried out by the skilled person without further ado. Moreover, the skilled person can determine suitable concentrations of media components without further ado.

For example, the following concentration ranges and concentrations for the following media components are considered as suitable. The present invention is, however, not limited to the media components referred to above and the following concentration ranges.

Concentration in composition A:
- Glycerol: 1.5 to 2 g/l, e.g. 1.86 g/l
- NH₄Cl: 0.1 to 1.0 g/l, e.g. 0.34 g/l
- KH₂PO₄: 0.01 to 0.3 g/l, e.g. 0.05 g/l
- MgCl₂ * 6 H₂O: 0.5 to 3 g/l, e.g. 1.3 g/l
- CaCl₂* 2 H₂O: 0.1 to 2 g/l, e.g. 0.55 g/l
- KCI: 0.5 to 3 g/l, e.g. 1.66 g/l
- MgSO₄.7H₂O: 0.5 to 3 g/l, e.g. 1.15g/l
- FeCl₃: 0.001 to 0.1 g/l, e.g. 0.005 g/l
- KBr: 0.1 to 2 g/l, e.g. 0.5 g/l
- MnCl₂.4H₂O: 0.001 to 0.1 g/l, e.g. 0.003 g/l

Further preferred concentrations for media components are specified in Table 6 of the Examples section. Further, the composition may comprise trace elements.

In a preferred embodiment of the present invention, composition A further comprises a substrate as source of carbon and energy. Said substrate shall allow for the growth of the microbial cells. Whether a substrate allows for the growth of the strain, or not, can be assessed by the skilled person without further ado.

In an embodiment, said substrate shall be present in addition to the at least one contaminant selected from the group consisting of nitrobenzene, formate, phenol, methylenedianiline, in particular 4,4'- Methylenedianiline (MDA) and aniline as the contaminants are degraded only and not used as substrate. Thus, it is contemplated that the substrate is not said at least one contaminant, i.e. is not nitrobenzene, formate, phenol, methylenedianiline, in particular 4,4'-Methylenedianiline (MDA) and aniline. Therefore, the substrate is herein also referred to as co-substrate.

Preferably, the presence of said substrate allows for an improved reduction of the content of e.g. aniline and formate (see examples sections). For example, the addition of glycerol significantly increases the degradation rates of all the contaminants (formate, aniline, MDA, nitrobenzene and phenol) as shown in WO 2019/121201.

The substrate is preferably added to composition A or to the waste water used for providing composition A. Accordingly, it is envisaged that the substrate is not originally present or is essentially not present in the wastewater used for providing composition A. Preferably, said substrate is a carbohydrate (that allows for the growth of the microbial cells), more preferably said substrate is glycerol, an organic acid, or a sugar (that allows for the growth of the microbial cells), more preferably the substrate is selected from glycerol, acetate, glucose, sucrose, lactate, malate, succinate, and citrate. In a particular preferred embodiment, the substrate is glycerol.

Preferably, composition A comprises a substrate if the incubation is carried out as continuous process. The substrate shall allow for biomass growth in slow rate in order to achieve stability of degradation in continuous mode.

Suitable concentrations or concentration ranges for the substrate can be determined by the skilled person without further ado. The reduction of the content of said at least one contaminant as referred to herein in the wastewater (composition A) and thus the incubation as referred to herein is preferably done under carbon limitation.

Accordingly, it is envisaged that the concentration of the substrate such allows for biomass growth at a slow rate. Thereby fresh biomass is produced which allows for the reduction of the content of said at least one contaminant in a continuous way. Preferably, the substrate is added to the wastewater or composition A in an amount that is completely taken up by the cells. Thus, it is envisaged that the TOC content would not be increased by the addition of the substrate.

For example, it is envisaged that the concentration of the substrate, in particular of the substrates mentioned above, in composition A is 0.5 g/l to 10 g/l, in particular 0.5 g/l to 5 g/l.

In an embodiment of the present invention, the further media components and/or the suitable substrate are (is) added to composition A. E.g. the further media components and/or the suitable substrate can be at the beginning of the incubation of composition A or during incubation of composition A (e.g. continuously or as pulse).

Of course, the concentration of the substrate will change during incubation, because the substrate will be metabolized by the cells comprised by composition A at a certain rate. Thus, the substrate concentration might not be constant. Nevertheless, additional substrate might be added during incubation in method step b) in order to compensate for the decrease of the substrate content.

In accordance with the method of the present invention, it is envisaged that contacting the wastewater with the microbial cells in step (a) - if microbial cells are actively added, does not significantly increase the volume of the resulting composition A (as compared to the volume of the wastewater). Accordingly, the main component of composition A shall be wastewater. Thus, step (a) does not significantly dilute the wastewater. The dilution factor is preferably lower than 1.2, more preferably lower than 1.1, and most preferably lower than 1.05. Further, it is envisaged that the dilution factor is lower than 1.03 or 1.02. The term "dilution factor" as used herein preferably refers to ratio of the volume of composition A to the volume of the wastewater cpmrised by composition A. In other words, composition A comprises (in particular consists of) at least 80%, more preferably at least 90%, and most preferably at least 95% by weight wastewater, based on the total weight of composition A. Further, it is envisaged that composition A comprises (in particular consists of) at least 97% or 98% by weight of wastewater, based on the total weight of composition A. Since the dilution factor is negligible, it is envisaged that composition A comprises the same, or essentially the same content of said at least one contaminant and NaCl as the wastewater. Thus, the concentrations of NaCl and of the at least one contaminant provided for composition A preferably are also the concentrations of NaCl and of the at least one contaminant in the hypersaline wastewater. Of course, the concentration of said at least one contaminant in composition A will decrease of time due the activity of the microbial cells.

### Incubation

After providing composition A, it is incubated in order to allow for the reduction of the at least one contaminants by the microbial cells. Accordingly, the method of the present invention comprises the further step (b) of incubating composition A. In this incubation step, the content of said at least one contaminant is reduced.

The incubation of composition A shall be carried out under suitable conditions, i.e. under conditions which allow for the reduction of the content of said at least one contaminant by the microbial cells. Preferably, the incubation is carried out in a bioreactor.

Preferably, the incubation of composition A (and thus the reduction of the content of said at least one contaminant) is carried out at a pH value of composition A in the range of 6.0 to 8.2, more preferably in the range of 6.2 to 7.6, most preferably in the range of 6.8 to 7.4. The optimal pH value is 7.2.

Moreover, it is envisaged that the incubation is preferably carried out at a temperature of 18°C to 55°C, more preferably at a temperature of 25°C to 45°C, even more preferably at a temperature of 30°C to 40°C, most preferably at a temperature of 35°C to 40°C. The optimal temperature is 37°C.

It is envisaged that the reduction is carried out at a constant temperature. However, it is also contemplated that the temperature might change during the incubation. In a preferred embodiment of the present invention, the temperature of composition A is monitored during incubation.

It is preferred that the reduction is carried out under oxic conditions. The term "oxic conditions" refers to a concentration of dissolved oxygen in composition A of at least 1 mg/l, preferably 2 mg/l and most preferably 4 mg/l.

In a preferred embodiment of the method of the present invention, composition A is agitated during incubation.

The incubation is carried out under aerobic conditions. Preferably, aerobic conditions are maintained by adding air or purified oxygen to composition A continuously.

Preferably, composition A has a pH value in the range of 5.8 to 8.5, more preferably 6.0 to 8.0, and most preferably in the range of 6.2 to 7.5. Accordingly, the incubation is preferably carried out at a pH value in the range of 5.8 to 8.5, preferably in the range of 6.2 to 7.5. In a preferred embodiment, the pH value of composition A is monitored during incubation. It is envisaged that the pH value is kept constant during cultivation. This can be e.g. achieved by adding HCI.

The concentration of the biomass of the cells, in the incubation step can be any concentration that allows for the reduction of the content of said at least one contaminant. For example, the biomass concentration can be in a range between 0.2 and 10 g/l, in particular in a range between 0.5 to 4.5 g/l. E.g. optimum biomass concentration for 250 mg/l aniline is 1.6 g/l. Thus, it is also envisaged that the biomass concentration is in a range between 1.3 to 1.9 g/l.

As set forth above, the method of the present invention is preferably carried out in a large scale. Accordingly, composition A has preferably a volume of at least 1, 10, 100, 500, 1000, 2500, or 5000 liters or any intermediate volume. However, smaller volumes such as volumes of at least 5 ml or 100 ml are envisaged by the present invention as well (e.g. for tests).

The method of the present invention, in particular the incubation as referred to herein in step b) of the method of the present invention, is preferably carried out as a batch, fed-batch or continuous process, in particular as batch, fed-batch or continuous process with cell retention (preferably in a bioreactor). Accordingly, composition A is incubated under batch, fed-batch, or continuous conditions. The term "batch process" preferably refers to a method of incubating cells in which all the components that will ultimately be used for incubating the cells including the substrate and the further media components, wastewater as well as the cells themselves, are provided at the initiation of the incubation process. A batch process is preferably stopped at some point and the treated hypersaline wastewater is isolated. The term "fed-batch process" as used herein refers to a process of incubating cells in which additional components such as the additional media components and/or the substrate are provided to the culture at some time after the initiation of the culture process. The fed-batch culture is preferably stopped at some point and the cells and/or components in the medium are harvested and the treated hypersaline wastewater is isolated.

In a particularly preferred embodiment, the method of the present invention, and thus the incubation as referred to herein, is carried in continuous culture with a mixed feed system using a substrate as referred to above (such as glycerol or acetate).

In a preferred embodiment of the aforementioned method of the present invention, the method further comprises the step of separating the *microbial* cells from the composition B, thereby giving a composition C. The separation of the cells from composition B shall be carried out after the incubation of composition A, i.e. after the reduction of the content of said at least one contaminant, as an additional step c).

The resulting composition C (which is herein also referred to as the "treated wastewater") shall be essentially free of the *microbial* cells. The term "essentially free of microbial cells" preferably refers to not more than 5 mg/l of total suspended solids.

The separation of cells from composition B can be achieved by all cell retention means that are deemed appropriate. For example, the separation of cells can be achieved by centrifugation, filtration, or by decanting. Preferably, the cells are separated from composition B by filtration.

Further, the cells could be immobilized on beads or a solid support, thereby allowing the separation of the cells from composition B.

If a continuous process is carried out, it is contemplated that the separated cells are fed back to the wastewater. Accordingly, the separated cells are added to yet untreated hypersaline wastewater.

If the method is carried out in a bioreactor, the bioreactor preferably comprises means for cell retention. Preferably, the bioreactor comprises a membrane suitable for separating the cells from composition B by filtration.

Composition C preferably has a TOC content of less than 40 mg/l, more preferably of less than 30 mg/l and most preferably of less than 20 mg/l.

In a preferred embodiment of the present invention, the method further comprises concentrating the composition C, thereby giving a composition C*.

This step will increase the NaCl concentration of the treated wastewater, i.e. the NaCl is up-concentrated in the composition. Preferably, the concentrated composition C* comprises NaCl in a concentration of more than 20.0% (w/v), based on the total volume of composition A, in particular in a concentration of more than 22% (w/v). These NaCl concentrations are ideal concentrations when used in the feed stream of the chloralkali process.

In accordance with the present invention, the up-concentration of composition C can be concentration by any method deemed appropriate. Preferred methods are reverse osmosis, ultrafiltration and nanofiltration. In these methods, a positive osmotic pressure to one side of a filtration membrane. Further, the up-concentration can be achieved by evaporization.

As set forth above, composition A and B may comprise NaCl in a concentration of more than 20% (w/v), based on the total volume of said composition. If these concentrations are used, the concentration step, in principle, could be omitted when subjecting the treated wastewater to the chloralkali process.

However, composition C and C* can be subjected to further purification steps. In an embodiment of the method of the present invention, the method further comprises the removal of inorganic components from said composition. Said inorganic components are preferably trace elements and/or salts of the media components. Particularly preferred is the full or partial removal of Mg²⁺ and/or Ca²⁺. The term "partial removal" preferably refers to a decrease of the original concentration of said ions by at least 50 %, more preferably at least 75 %. The removal shall be carried out prior to subjecting composition C or C* to sodium chloride electrolysis.

The definitions and explanations given herein above apply *mutatis mutandis* to the following subject-matter of the present invention, in particular to the following method of the present invention for the production of chlorine and/or sodium hydroxide, to the composition of the present invention, the bioreactor of the present invention, and the use of the present invention.

The present invention also relates to a method for the production of chlorine and sodium hydroxide, comprising the steps of
(i) providing a composition C according to the method of the present invention or a composition C* according to the method of the present invention, and
(ii) subjecting the composition according to (i) to a sodium chloride electrolysis, thereby producing chlorine and sodium hydroxide.

Step (i) of the aforementioned method, i.e. the provision of a composition C according to the method of the present invention or of a composition C* according to the method of the present invention, preferably comprises the steps of the method for reducing the content of at least one contaminant selected from the group consisting of nitrobenzene, formate, phenol, 4,4'-Methylenedianiline (MDA) and aniline of a hypersaline solution.

In an embodiment, composition C is provided by the following substeps of method step (i):
a) providing a composition A comprising hypersaline wastewater, microbial cells belonging to at least one genus selected from the group consisting of *Haloferax, Halomonas, Aliifodinibius and Oceanobacillus* and at least one contaminant, wherein said composition A is characterized by a growth-limiting concentration of at least one inorganic nutrient,
b) incubating composition A, thereby reducing the content of the at least one contaminant, wherein a composition B is obtained.
c) separating the microbial cells from composition B, thereby providing composition C.

If composition C* is provided, step (i) or (ii) preferably comprises an additional step of concentrating the composition C, thereby providing composition C*. This step must take place after substep b) of method step (i) but before the electrolysis in method step (ii).

The electrolysis of sodium chloride can be carried out by methods well known in the art. Membrane electrolysis processes are usually used, for example, for the electrolysis of solutions containing sodium chloride (on this subject, see Peter Schmittinger, CHLORINE, Wiley-VCH Verlag, 2000). Here, an electrolysis cell which is divided in two and comprises an anode space with an anode and a cathode space with a cathode is used, Anode space and cathode space are separated by an ion-exchange membrane. A solution containing sodium chloride and having a sodium chloride concentration of usually more than 300 g/l is introduced into the anode space. At the anode, the chloride ion is oxidized to chlorine which is discharged from the cell with the depleted sodium chloride solution (about 200 g/l). The sodium ions migrate under the action of the electric field through the ion-exchange membrane into the cathode space. During this migration, each mol of sodium carries with it from 3.5 to 4.5 mol of water, depending on the membrane. This leads to the anolyte becoming depleted in water. In contrast to the anolyte, water is consumed on the cathode side by the electrolysis of water to form hydroxide ions and hydrogen. The water carried with the sodium ions into the catholyte is sufficient to keep the sodium hydroxide concentration in the output at 31-32% by weight, at an inlet concentration of 30% and a current density of 4 kA/m². In the cathode space, water is electrochemically reduced to form hydroxide ions and hydrogen.

As an alternative, a gas diffusion electrode at which oxygen is reacted with electrons to form hydroxide ions and no hydrogen is formed can be used as cathode. The hydroxide ions together with the sodium ions which have migrated into the cathode space via the ion-exchange membrane form sodium hydroxide. A sodium hydroxide solution having a concentration of 30% by weight is usually fed into the cathode chamber and a sodium hydroxide solution having a concentration of 31-32% by weight is discharged. The aim is to achieve a very high concentration of sodium hydroxide since the sodium hydroxide is usually stored or transported as a 50% strength solution. However, commercial membranes are at present not resistant to an alkali solution having a concentration greater than 32% by weight, so that the sodium hydroxide solution has to be concentrated by thermal evaporation.

In the case of the electrolysis of sodium chloride, additional water is introduced into the anolyte via this solution containing sodium chloride, but water is only discharged into the catholyte via the membrane. If more water is introduced via the solution containing sodium chloride than can be transported to the catholyte, the anolyte becomes depleted in sodium chloride and the electrolysis cannot be operated continuously. In the case of very low sodium chloride concentrations, the secondary reaction of oxygen formation would occur.

In a preferred embodiment of the method of the present invention, the electrolysis is membrane cell electrolysis of sodium chloride, in particular membrane electrolysis using oxygen consuming electrodes, diaphragm cell electrolysis of sodium chloride or mercury cell electrolysis of sodium chloride.

The present invention further concerns the composition A as defined herein above in connection of the method of the present invention. Accordingly, the present invention relates to the composition A comprising hypersaline wastewater, at least one contaminant selected from the group consisting of nitrobenzene, formate, phenol, 4,4'-Methylenedianiline (MDA) and aniline, and microbial cells belonging to at least one genus selected from the group consisting of *Haloferax, Halomonas, Aliifodinibius* and *Oceanobacillus* . The microbial cells belong to at least one genus selected from the group consisting of *Haloferax, Halomonas, Aliifodinibius and Oceanobacillus.* It is more preferred that the microbial cells belong to at least one genus selected from the group consisting of *Haloferax, Halomonas* and *Aliifodinibius* and *Oceanobacillus.* It is most preferred that the microbial cells belong to the genus *Haloferax* and/or *Halomonas.*

Preferred contents/concentrations of said at least one contaminant or and further preferred NaCl concentrations are disclosed in connection of the method of the present invention for reducing the aniline and/or the formate content. In addition, the composition may comprise components (such as further media components and/or a suitable substrate etc.) as described above.

Further, the present invention relates to a bioreactor comprising at least 1 l of the composition B of the present invention.

Further, the present invention relates to the use microbial cells belonging to at least one genus selected from the group consisting of *Haloferax, Halomonas, Aliifodinibius* and *Oceanobacillus* for reducing the content of at least one contaminant selected from the group consisting of nitrobenzene, formate, phenol, 4,4'-Methylenedianiline (MDA) and aniline of hypersaline wastewater. In particular, the present invention relates to the use of said cells for reducing the content of said at least one contaminant of a composition B.

The definitions and explanations given herein above in connection with the method of the present invention of reducing the content of said at least one contaminant apply accordingly to aforementioned uses. Thus, in accordance with the aforementioned uses, the content of said at least one contaminant is preferably reduced as described herein above in connection with the method of the present invention.

The following examples are merely intended to illustrate the present invention. They shall not limit the scope of the claims in any way.

### Examples

### Example 1: Discovery of halophilic community

The halophilic microorganisms were discovered in the course of a cultivation experiment, where a pilot-scale bioreactor was inoculated with *Haloferax mediterranei (DSM 1411)* (in this study HFX) wild type strain, which was purchased from DSMZ - German collection of microorganisms and cell cultures. The pilot-scale bioreactor was implemented in an industrial environment, where industrial process brine is generated. The process brine should be treated biologically in the bioreactor using HFX, to degrade organic content as described above.

### Experimental setup and media

The bioreactor setup, where the cultivations were performed, is a corrosion-resistant, custom-made bubble column reactor, with a total volume of 21 l (Diameter 13.4 cm; Height 1.1 m; Möstl Anlagenbau, Arzberg, Austria). The bioreactor consists of Hastelloy-C22 extended with a loop where all piping, valves, and screwing are made of PVDF or PTFE. The loop also contains a membrane-based cell retention unit (Hollow Fiber Cartridge, CFP-2-E-9A, 0.2µm, 8400 cm², GE, Westborough, USA) and a 4-piston diaphragm loop pump (Quattroflow, ALMATEC Maschinenbau, Germany) with a polypropylene pump head for circulation the cell suspension with a flow of around 100 L h⁻¹. The bleed was released over a digitally operated valve (Bürkert, Germany) into the bleed vessel and worked as a control valve to keep the reactor volume constant. The filtrate was withdrawn over the membrane, using a peristaltic pump (ISMATEC Reglo Quick, Cole-Parmer, USA). As inputs, the bioreactor system contains an analog pump (Magdos, Lutz-Jesco GmbH, Wedemark, Germany) to continuously add fresh medium and a digital pump (Magdos, Lutz-Jesco GmbH, Wedemark, Germany) to add base (5% NaOH) for adjusting the pH inside the bioreactor. The flow rates for feed and harvest were calculated based on gravimetric measurements with a resolution of 10 g (Mettler Toledo, USA). Flow rates of base and bleed were determined with a resolution of 0.1 g (Kern & Sohn GmbH, Balingen-Frommern, Germany). The inlet airflow was kept constant at 3.2 L min⁻¹ (0.2 vvm) via a mass flow controller (Brooks Instrument, USA). Dissolved oxygen was measured using an Oxyferm probe (Visiferm DO Arc 120, Hamilton, Bonaduz, Switzerland) placed in the loop piping. To increase oxygen transfer into the liquid phase the pressure was kept constant at 2 bar with an electronic valve (Bürkert, Germany). The pH was measured using an Easyferm pH probe (InPro3250i, Mettler Toledo, Germany), which was also placed in the loop. The pH was kept constant at 7, by addition of 0.5 M NaOH. The temperature probe (Onigrad TR88, Endress + Hauser, Reinach, Switzerland) was placed on the reactor vessel wall, to measure the temperature inside the reactor. The temperature was held constant at 30 °C during the cultivation In the headspace, before and after the membrane, as well as on the filtrate side, sensors were placed to measure the pressure in the system (Signet 2450, Georg Fischer, USA). The composition of off-gas was determined using a BlueVary gas analyzer system (BlueSens, Herten, Germany). For preparing the wastewater medium, a 200 L stirred vessel (Schwarzer Rührtechnik, Delmenhorst, Germany) made from polypropylene was used. The finished feed was then transferred to another 200 L feed vessel, from where the fermenter was continuously fed. The medium consisted of wastewater and the following added macronutrients as described in Tables 1-3. This corresponds to composition A.

**Table 1. Media components**

| **Chemical** | **Concentration [g/L]** |
|---|---|
| Glycerol | 1.5-2 |
| NH₄Cl₂ | 1 |
| KH₂PO₄ | 0.15 |
| MgCl₂ · 6 H₂O | 1.3 |
| MgSO₄ · 7 H₂O | 1.1 |
| CaCl₂ · 2 H₂O | 0.55 |
| KCI | 1.66 |
| Fe(III)Cl₃ | 0.005 |
| Trace element solutions | 1 mL/L |
| Manganese-stock | 1 mL/L |

**Table 2. trace element solution**

| **Chemical** | **Concentration [g/L]** |
|---|---|
| FeSO₄ · 7 H₂O | 1.39 |
| CuSO₄ · 5 H₂O | 1.0 |
| CoCl₂ · 2 H₂O | 0.62 |
| ZnSO₄ · 7 H₂O | 0.86 |

**Table 3. Manganese stock**

| **Chemical** | **Concentration [g/L]** |
|---|---|
| MnCl₂ · 4 H₂O | 0.18 |

### Analytics

Genetic sequencing analyses were performed by external laboratories. For that, genomic DNA from bioreactor samples were prepared and sent to the external laboratories. To do so, 2 mL of a culture sample with an OD of approx. 1-2 was centrifuged and treated as described in the DNA extraction kit (DNeasy^{®} UltraClean^{®} Microbial Kit, Qiagen, The Netherlands). The purified genomic DNA samples were sent to the external laboratories for *Amplicon Depp Sequencing* analyses.

For strain identification, sequencing of the 16S rRNA was performed. Therefore, also genomic DNA was purified from biomass samples. With the DNA, a PCR (polymerase chain reaction) was performed with forward primer 27f (Marchesi et al., 1998, "Design and Evaluation of Useful Bacterium-Specific PCR Primers That Amplify Genes Coding for Bacterial 16S rRNA", Applied and Environmental Microbiology, 64: 795-799) and backward primer 1494r (Madrid et al., 2001, "Phylogenetic Diversity of Bacterial and Archaeal Communities in the Anoxic Zone of the Cariaco Basin", Applied and Environmental Microbiology, 67: 1663-1674).

### Identification and characterization of halophilic mixed culture

In the course of this study, a halophilic bacterial community able to grow in wastewater of composition B was discovered. Therefore, an Amplicon Deep Sequencing was performed at three different cultivation time points, representing the beginning (day 4), the middle (day 35) and the end of the cultivation (day 205) to identify present bacterial genera based on 16S rRNA analysis. To do so, genomic DNA of biomass samples taken at the specific dates was purified and sent for the analysis to the external laboratory. In Table 4, the share of readouts for the identified taxonomic genera is shown. It can be seen, that at the beginning (day 4), the main part of bacterial strains can be allocated to the genus of Halomonas species (>94%), whereas little shares of *Oceanobacillus* sp. and *Aliifodinibius* sp. were found. This changes over time, as the main shares of total readouts are allocated to *Halomonas* sp. and *Aliifodinibius* sp. after 35 and 201 days of cultivation. *Oceanobacillus* sp., however, almost vanished from the bioreactor, making only 0.03% and 0.01% of total readouts at days 35 and 201, respectively. All the found genera belong to halophilic (*Halomonas* sp. and *Aliifodinibius* sp.) or halotolerant (*Oceanobacillus* sp.) bacteria.

**Table 4. Results of the Amplicon Deep Sequencing. Three different samples were taken from the bioreactor at days 4, 35 and 201. Results show the share of the total readouts (in %) for each halophilic genus found in the samples by performing Amplicon Deep Sequencing.**

| | **Share of readouts for microbial genus [%]** | | |
|---|---|---|---|
| **Day of cultivation** | ***Halomonas* sp.** | ***Aliifodinibius* sp.** | ***Oceanobacillus* sp.** |
| 4 | 95.53 | 0.01 | 5.46 |
| 35 | 57.07 | 42.9 | 0.03 |
| 201 | 48.28 | 51.71 | 0.01 |

To further investigate and characterize the mixed culture found in bioreactor samples, 16S rRNA sequencing experiments were performed, using genomic DNA purified from single colonies. These single colonies were gained, as a culture sample from the end of the cultivation was grown on agar plates with undefined preculture medium. In total nine single colonies were taken and placed separately on another agar plate. From this plate, shake flasks were inoculated, in order to purify genomic DNA from the biomass. The purified DNA was then used as template for PCR experiments using the primers mentioned above. The results of the 16S rRNA sequencing can be seen in Table 5.

**Table 5. Results of 16S rRNA sequencing experiments.**

| **Contig #** | **rRNA cover** | **Query cover [%]** | **Identity [%]** | **Strain** |
|---|---|---|---|---|
| 1 | 49-1462 | 100 | 99,86 | *Halomonas organivorans* strain G-16.1 |
| 2 | 49-1462 | 100 | 99,86 | *Halomonas organivorans* strain G-16.1 |
| 3 | 49-1462 | 100 | 99,86 | *Halomonas organivorans* strain G-16.1 |
| 4 | 49-1462 | 100 | 99,86 | *Halomonas organivorans* strain G-16.1 |
| 5 | 49-1462 | 100 | 99,86 | *Halomonas organivorans* strain G-16.1 |
| 6 | 49-1462 | 100 | 99,86 | *Halomonas organivorans* strain G-16.1 |
| 7 | 49-1462 | 100 | 99,86 | *Halomonas organivorans* strain G-16.1 |
| 8 | 49-1462 | 100 | 99,86 | *Halomonas organivorans* strain G-16.1 |
| 9 | 49-1462 | 100 | 99,86 | *Halomonas organivorans* strain G-16.1 |

All nine single colonies were identified as *Halomonas organivorans* strain G-16.1. However, the sequencing experiments could show, that at least three bacterial genera were identified (*Halomonas* sp., *Aliifodinibius* sp., and *Oceanobacillus* sp.). Over time, mainly *Halomonas* sp. and *Aliifodinibius* sp. were present in the reactor. Analysis of the 16S rRNA sequencing of single colonies, however, only identified one strain, *H. organivorans* strain G16.1. The identification of the Halomonas strain *H. organivorans* strain G16.1 in a salty environment, contaminated with aromatic substances, was not surprising, as this strain is reported for degrading aromatics, such as phenol. Also, other Halomonas strains, such as *H. campisalis* or *H. anticariensis FP35,* are known for their ability to degrade various aromatic compounds, such as phenol, catechol, or polycyclic aromatic hydrocarbons (PAH).

### Example 2: Degradation experiments under C/N/P-limited conditions

### Experimental setup and media

Continuous cultivation with cell retention was performed in a corrosion-resistant stirred tank reactor with a total volume of 2.3 L (PEEK Labfors bioreactor, Infors, Switzerland), equipped with a 420 cm² microfiltration unit (model: CFP-2-E-4A, polysulfone membrane, 0.2 µm pore size, GE Healthcare, Germany). Peristaltic pumps were used for loop (Ecoline, Ismatec, Germany), feed (industrial residual brine), bleed, harvest (Lambda Preciflow, Lambda Instruments, Switzerland), and base (peristaltic pump installed at the Infors bioreactor tower). The dilution rate D was kept constant at 0.1 h⁻¹ for all experiments. Temperature was kept constant for the cultivation at 30 °C. The pH was measured using an Easyferm probe (Hamilton, Switzerland) and adjusted to 7 using 0.5 M NaOH via the integrated dosing system of the Labfors system. Reactor volume was kept constant at 1 ± 0.05 L. The reactor volume, feed (industrial residual brine), and base consumption are continuously monitored by laboratory scales with 0.1 g resolution (Mettler Toledo, USA).

The inlet airflow was kept constant at 100 mL min⁻¹ via a mass flow controller (Brooks Instrument, USA). Dissolved oxygen was measured using an Oxyferm probe (Hamilton, Switzerland) and kept above 20% to guarantee aerobic conditions in the reactor. Oxygen transfer was adjusted by variation of stirrer speed between 400 and 560 rpm (rounds per minute). The composition of off-gas was determined using a BlueSens gas analyzer system (BCP O₂ and CO₂, BlueSens, Germany). To reduce its water content the off-gas passed a countercurrent condenser before entering the gas analyzer system.

The online data monitoring and process control were executed with a process information management system (Lucullus, SecureCell, Switzerland).

The medium consisted of wastewater with the following added macronutrients as described in Tables 6-8. This corresponds to composition A.

**Table 6. Media components**

| **Chemical** | **Concentration [g/L]** |
|---|---|
| Glycerol | 2 |
| NH₄Cl₂ | 0.1 - 1.0 |
| KH₂PO₄ | 0.05 - 0.15 |
| MgCl₂ · 6 H₂O | 1.3 |
| MgSO₄ · 7 H₂O | 1.1 |
| CaCl₂ · 2 H₂O | 0.55 |
| KCI | 1.66 |
| Fe(III)Cl₃ | 0.005 |
| Trace element solutions | 1 mL/L |
| Manganese-stock | 1 mL/L |

**Table7. trace element solution**

| **Chemical** | **Concentration [g/L]** |
|---|---|
| FeSO₄ · 7 H₂O | 1.39 |
| CuSO₄ · 5 H₂O | 1.0 |
| CoCl₂ · 2 H₂O | 0.62 |
| ZnSO₄ · 7 H₂O | 0.86 |

**Table 8. Manganese stock**

| **Chemical** | **Concentration [g/L]** |
|---|---|
| MnCl₂ · 4 H₂O | 0.18 |

### Analytics

Substrate quantification in the feed and harvest samples was performed using a HPLC (U3000 UHPLC systems, Thermo-Fisher, USA) with an Aminex HPX-87H column (Bio-Rad, USA) at 60 °C, an isocratic eluent of 4 mM sulfuric acid in Milli-Q water with a flow of 0.6 ml min⁻¹ followed by UV detection at 210 nm and RI detection (RefracoMax520, ERC, Germany). In brief, samples were centrifuged, and the supernatant was diluted (1:10) with 40 mM sulfuric acid before 10 µL was injected in the HPLC. The samples were analyzed for residual formate and glycerol, as well as the formation of organic acids. The standards, used for quantifications, were prepared the same way as the samples and diluted with 40 mM sulfuric acid.

Quantification of aromatic compounds in feed and harvest samples was performed as previously described (Mainka, T., Mahler, N., Herwig, C., Pflügl, S. 2019. "Soft Sensor-Based Monitoring and Efficient Control Strategies of Biomass Concentration for Continuous Cultures of Haloferax mediterranei and Their Application to an Industrial Production Chain." Microorganisms, 7(12)), using a reversed-phase HPLC measurement method (Vanquish UHPLC systems, Thermo-Fisher, USA) with an Acclaim^{™} PolarAdvantage column (Thermo Scientific, USA, C16, 3 µm, 120 Å, 4.6x150 mm) at 30 °C. The flow of this altered method was set to 0.6 mL min⁻¹ with a gradient system: 0-5 min: 5% A, 95% B; 5-10 min: 25% A; 75% B; 10-33 min: linear increase of A from 25% to 70%, rest B; 33-35 min: 70%A, 30%B; 35-40 min: linear decrease of A from 70% to 5%, rest B; 40-45 min: 5% A, 95% B. Samples were centrifuged before analysis and 10 µL undiluted supernatant was injected for HPLC analysis. This method was used for analysing samples from a scale-up study. Aromatic compounds were detected using a UV detector at 230-270 nm.

The determination of ammonium and phosphate was carried out in a Cedex Bio HT Analyzer (Roche, Germany), where enzymatic assays are used and combined with photometric measurements. For these measurements, the limits of detection of the analyzer are 0.238 mmol L⁻¹ for ammonium and 0.1 mmol L⁻¹ for phosphate.

### Degradation of aniline, phenol, 4,4'-MDA and formate under different ammonium and phosphate concentrations

The halophilic microorganisms (as described in Example 1) were cultivated in real industrial brine using media components as described in Tables 6-8, under conditions described in Experimental setup and media. Glycerol, the ammonium source, and the phosphate source were added to the brine in concentrations as indicated in Table 9. Glycerol was added as a co-substrate to maintain sufficient biomass growth. Glycerol was degraded completely during the cultivation time, resulting in limitation conditions for the growth substrate.

The ammonium and phosphate were fed in concentrations to obtain three different states:
1) more ammonium or phosphate was fed as the microorganisms consume → no N/P limitation
2) equal or almost equal the amount the microorganisms consume (previously determined) → may limited conditions, at least low residuals of N and P measurable
3) concentrations below the ammonium and phosphate consumption level of the microorganisms → definite limited conditions for N/P

**Table 94. Feed and harvest concentrations of ammonium and phosphate. Glycerol feed concentration and formate degradation efficiency (measured in % of feed concentration), and the consumed amount of nitrogen and phosphate based on glycerol consumption.**

| **Exp.** | **NH₄⁺ Feed [g L^{- 1}]** | **NH₄⁺ Harv. [g L^{- 1}]** | **PO₄⁻ Feed [g L^{- 1}]** | **PO₄⁻ Harv. [g L^{- 1}]** | **Glyc. Feed [g L^{- 1}]** | **Formate Deg. [%]** | **Consumed N and P per mol glycerol [mol_{gly}/mol_{N}/mol_{P}]** |
|---|---|---|---|---|---|---|---|
| **N1** | 19.75 | 10.87 | 1.11 | 0.76 | 1,92 | 97.63 | 1/0.050/0.0019 |
| **N2** | 19.90 | 12.86 | 0.07 | 0.00 | 1.87 | 97.48 | 1/0.040/0.0004 |
| **N3** | 4.63 | 0.00 | 1.02 | 0.30 | 1.91 | 97.74 | 1/0.024/0.0036 |
| **N4** | 4.69 | 0.00 | 0.07 | 0.00 | 1.84 | 97.35 | 1/0.026/0.0003 |
| **N5** | 9.65 | 1.28 | 0.34 | 0.00 | 1.91 | 98.17 | 1/0.049/0.0020 |
| **N6** | 8.72 | 0.92 | 0.37 | 0.00 | 2.14 | 98.03 | 1/0.046/0.0022 |
| **N7** | 9.75 | 0.52 | 0.35 | 0.17 | 1.96 | 97.93 | 1/0.051/0.001 |

As a consequence, the following states should be obtained during the cultivation experiments:
- no N-limitation, no P-limitation (N1)
- N-limitation, no P-limitation (N3)
- no N-limitation, P-limitation (N2)
- N-limitation, P-limitation (N4)
- N and P were added in amount equal to the consumed amounts derived from N1 (N5-7)
The real industrial brine, moreover, contained formate in concentrations from 0.277-0.356 g L⁻¹. The aromatic contaminants were present in concentration ranges from 0.16-7.0 mg L⁻¹ and were degraded completely during the cultivation process.

In Table 9, it is shown, that formate is degraded under limited, as well as under unlimited conditions of ammonium and phosphate to an efficiency of over 96%. Ammonium and phosphate concentration in the feed formate degradation efficiency did not show an influence on the formate degradation efficiency .

### Summary - Conclusion:

Hypersaline wastewaters frequently comprise organic pollutants such as formate aniline, phenol, nitrobenzene and 4,4'Methylenedianiline. Reduction of these organic compounds is necessary if saline wastewater should be reused for chlor-alkali electrolysis. However, other substances might also negatively affect the chlor-alkali electrolysis, such as nitrogen compounds. As for the biological treatment of wastewater, nitrogen (in form of ammonium) is an important macronutrient and essential for microbial growth, it has to be added, if not already present in the wastewater. Nevertheless, nitrogen should be removed completely during biological wastewater treatment and no residuals should be left.

It was surprisingly found that the amount of ammonium (nitrogen) and phosphate could be decreased to limiting conditions without detrimental effect on contaminant degradation. Thus, the treated wastewater did not contain nitrogen or phosphate in concentrations which are detrimental to chlor-alkali-electrolysis. Moreover, the use of growth-limiting concentrations of inorganic nutrients limits the build-up of biomass. As microbial biomass may also be detrimental to the further use of the treated wastewater, this is a further advantage.

## Claims

1. A method for decreasing the content of at least one contaminant selected from the group consisting of nitrobenzene, formate, phenol, methylenedianiline and aniline in hypersaline wastewater, said method comprising the steps of:
a) providing a composition A comprising hypersaline wastewater, microbial cells belonging to at least one genus selected from the group consisting of *Haloferax, Halomonas, Aliifodinibius and Oceanobacillus* and at least one contaminant, wherein said composition A is **characterized by** a growth-limiting concentration of at least one inorganic nutrient, and
b) incubating composition A, thereby reducing the content of the at least one contaminant so that a composition B is generated.

2. The method of claim wherein the inorganic nutrient is selected from the group consisting of phosphor, nitrogen, sulfur, potassium, magnesium and iron.

3. The method of claim 1 or 2, wherein not more than 0.07 mol nitrogen and/or not more than 0.018 mol phosphor per mol organic carbon are present in composition A at the beginning of method step b)

4. The method of any one of claims 1 to 3, wherein composition A comprises NaCl in a concentration between 6 % and 25 % weight/volume based on the total volume of composition A.

5. The method of any one of claims 1 to 4, wherein composition A comprises at least 0.01 mg/l 4,4'-methylenedianiline (MDA) and/or 0.05 mg/l of at least one contaminant selected from the group consisting of formate, phenol, nitrobenzene, and aniline.

6. The method of any one of claims 1 to 5, wherein composition A comprises a substrate that allows growth of the *Haloferax mediterranei* cells selected from the group consisting of glycerol, sugars and organic acids.

7. The method of any one of claims 1 to 6, wherein the incubation in method step b) is carried out at a temperature between 18 °C and 55 °C.

8. The method of any one of claims 1 to 7, wherein the incubation is carried out under oxic conditions.

9. The method of any of claims 1 to 8, wherein the content of at least one contaminant is decreased by at least 30 weight-%.

10. The method of any one of claims 1 to 9, wherein the method comprises a further step of separating the cells from composition B, thereby giving composition C.

11. A method for the production of chlorine and sodium hydroxide, said method comprising the steps of:
a) providing a composition C according to the method of claim 9; and
b) subjecting said composition C to a sodium chloride electrolysis process, thereby producing chlorine and sodium hydroxide.

12. The method according to claim 11, wherein the sodium chloride electrolysis process is membrane cell electrolysis or diaphragm cell electrolysis.

13. Use of microbial cells belonging to at least one genus selected from the group consisting of *Haloferax* , *Halomonas, Aliifodinibius* and *Oceanobacillus* for decreasing the content of at least one contaminant selected from the group consisting of nitrobenzene, formate, phenol, methylenedianiline and aniline in hypersaline wastewater under conditions, wherein the availability of at least one inorganic nutrient limits growth of said microbial cells.
